# EUROPÄISCHE PATENTANMELDUNG

(11) **EP 1 724 089 A1**
(43) Veröffentlichungstag der Anmeldung: **22.11.2006**
(21) Anmeldenummer: 06005812.0
(22) Anmeldetag: 22.03.2006
(51) Int. Cl.: B29C 45/26, F16H 61/00, B29C 45/33

(54) **Verfahren zum Herstellen eines Kunststoffteils, Werkzeug zum Durchführen des Verfahrens und danach hergestelltes Kunststoffteil**

(30) Priorität: 19.05.2005 DE 102005022956
(71) Anmelder: ElringKlinger AG, 72581 Dettingen/Erms (DE)
(72) Erfinder: Ilg, Michael, 72532 Gomadingen (DE); Amann, Erich, 72108 Rottenburg (DE); Bendl, Klaus, 75038 Oberderdingen (DE)
(74) Vertreter: Bartels, Martin Erich Arthur

(57) **Zusammenfassung**

Die Erfindung betrifft ein Verfahren zum Herstellen eines Kunststoffteils (10), insbesondere in Form eines Steuergehäuseteils für ein Getriebe bei Kraftfahrzeugen, mit einer Vielzahl an fluidführenden Kanälen (12), das zumindest teilweise von Seitenwänden (14) begrenzt wird, von denen ein Teil in Nebeneinanderanordnung einen Einbauraum (20) zur Auf nahme mindestens eines Einbauteils begrenzt, der mittels eines Formteils (26) als Teil eines Formwerkzeuges (18) erstellt wird, sowie ein hierfür geeignetes Werkzeug und ein danach hergestelltes Formteil.

## Beschreibung

Die Erfindung betrifft ein Verfahren zum Herstellen eines Kunststoffteils sowie ein Werkzeug zum Durchführen des Verfahrens und ein danach hergestelltes Kunststoffteil.

Durch die DE 102 60 042 A1 ist es bekannt, ein Turbolader-Gehäuse eines Abgasturboladers eines Verbrennungsmotors mit einem aus einem Duroplast gefertigten Verdichtergehäuse zu versehen, welches eine Verdichterrückwand sowie ein unter Bildung eines Verdichterinnenraums mit dieser verbundenes Verdichterfrontteil mit einer innenseitigen Schneckenkontur umfaßt.

Bisher sind dahingehende Gehäuse eines Abgasturboladers, insbesondere für ein Kraftfahrzeug, aus einem metallischen Werkstoff gefertigt worden. Ferner ist eine Gewichtseinsparung durch die Verwendung von keramischen Werkstoffen oder Kohlenstoff-Verbundwerkstoffen möglich. Die Herstellung dahingehender Turbolader-Gehäuse bedingen jedoch aufwendige Fertigungsverfahren, was mit einem entsprechenden Kostenaufwand einhergeht. Bei der bekannten Anordnung nach der DE 102 60 042 A1 umfassen die mittels eines Duroplastwerkstoffes hergestellten Verdichtergehäuseteile Teile des Turboladers, insbesondere in Form seines Verdichterteils; allein eine Bauteilaufnahme in integrierender Weise in die Kunststoffwände des Gehäuseteils ist nicht vorgesehen und mit der beschriebenen Anordnung auch nicht möglich.

Ausgehend von diesem Stand der Technik liegt der Erfindung die Aufgabe zugrunde, unter Beibehalten der beschriebenen Vorteile im Stand der Technik die bekannten Lösungen dahingehend weiter zu verbessern, dass sich vermehrt Anwendungsmöglichkeiten für Kunststoffteile, vorzugsweise innerhalb der Kraftfahrzeugtechnologie, erschließen lassen.

Das erfindungsgemäße Verfahren ist dadurch charakterisiert, dass ein Kunststoffteil, insbesondere in Form eines Steuergehäuseteils für ein Getriebe bei Kraftfahrzeugen, mit einer Vielzahl an fluidführenden Kanälen, zumindest teilweise von Seitenwänden begrenzt wird, von denen ein Teil in Nebeneinanderanordnung einen Einbauraum zur Aufnahme mindestens eines Steuerteils begrenzt, der mittels eines Formteils des Formwerkzeuges erstellt wird. Hierdurch läßt sich das erfindungsgemäße Verfahren auf Anwendungsfälle erstrecken, bei denen in den Kunststoffteilen selbst zur Aufnahme eines Einbauteils Einbauraum zu schaffen ist. Es ist für einen Durchschnittsfachmann auf dem Gebiet der Kunststofftechnologie bei Kraftfahrzeugen überraschend, dass er unter Einsatz des erfindungsgemäßen Verfahrens Kunststoffe, insbesondere im Bereich von Kraftfahrzeugantrieben, einsetzen kann, die bislang anerkanntermaßen hierfür nicht zugänglich waren.

So wurden bisher Steuergehäuseteile für Schalt- oder Automatikgetriebe bei Kraftfahrzeugen aus Aluminiumdruckguß hergestellt, die eine Vielzahl an fluidführenden Kanälen aufweisen, deren begrenzende Seitenwände zumindest teilweise spanend bearbeitet werden, um dergestalt Einbauraum für die Aufnahme von Einbauteilen, wie Steuerventilen, für die Fluidführung und Ansteuerung zu schaffen. Dadurch, dass nach dem erfindungsgemäßen Verfahren der Einbauraum für das Steuerventil separat zu diesem erstellt wird, kann auf spanende Vorgänge verzichtet werden und der Einbauraum ist unmittelbar über das Kunststoff-Formgebungsverfahren erhalten.

Bei einer bevorzugten Ausführungsform des erfindungsgemäßen Verfahrens ist dabei vorgesehen, dass das Formwerkzeug mit Führungsstegen versehen wird, die die Seitenwände des Einbauraumes zumindest teilweise begrenzen und in die Durchgriffsöffnungen eingebracht werden, die dem Durchgriff des Formteils dienen und deren freier Querschnitt größer gewählt wird als der freie Querschnitt des Einbauraumes. Vorzugsweise ist dabei ferner vorgesehen, dass bei in den Durchgriffsöffnungen des Formwerkzeuges eingebrachtem Formteil das Kunststoffmaterial dem Formwerkzeug zugeführt wird, das den Raum zwischen Schieberteil und zuordenbarer Durchgriffsöffnung unter Bildung von Wandteilen ausfüllt und dass nach Entfernen des Formteils und Ausformen des Kunststoffteils aus dem Formwerkzeug dieses die Wandteile unter Freigabe des Einbauraumes ausbricht.

Dergestalt ist eine sehr gute Entformung für das Kunststoff-Formteil erreicht und ohne größere Nacharbeiten ist dergestalt ein zugänglicher Einbauraum für den Einsatz von Einbauteilen, wie Steuerventilen, geschaffen. Insbesondere kann auf den Einsatz spanender Nachbearbeitung verzichtet werden und mit Bürst- oder Blasvorgängen, wie sie bei der Kunststoffentformung üblich sind, läßt sich in kostengünstiger Weise maßhaltig die Kontur des Einbauraumes erhalten.

Bei einer besonders bevorzugten Ausführungsform des erfindungsgemäßen Verfahrens ist vorgesehen, dass als Formmaterial für das Kunststoffteil ein Duroplast, vorzugsweise in Form von Phenolharz, eingesetzt wird, das mittels eines üblichen Spritz- oder Druckgußverfahrens in das Formwerkzeug eingebracht wird. Durch den Einsatz eines Duroplasten in Form von Phenolharz ist eine sehr druckfeste Ausbildung für das Kunststoffteil erreichbar und es ergibt sich in hohem Maße eine Temperaturstabilität über den genannten Temperaturbereich. Insbesondere hat es sich als vorteilhaft erwiesen, dass das Phenolharz einen gleichbleibenden E-Modul über den gesamten Arbeitstemperaturbereich des Steuergehäuseteils aufweist. Das erhaltene Phenolharz-Kraftfahrzeug-Steuergehäuseteil ist demgemäß für die auftretenden Beanspruchungen als besonders geeignet anzusehen und baut darüber hinaus sehr leicht auf, was insgesamt zu einer Gewichtsersparnis für das Getriebe führt. Da auf aufwendige Nachbearbeitungsvorgänge, wie einer spanenden Bearbeitung od. dgl., verzichtet werden kann, ist darüber hinaus das beschriebene Herstellverfahren sehr kostengünstig in der Anwendung.

Weitere vorteilhafte Ausführungsformen der erfindungsgemäßen Lösung, die das Formwerkzeug betreffen sowie das Kunststoffteil selbst, sind Gegenstand der sonstigen Unteransprüche.

Im folgenden wird die erfindungsgemäße Lösung anhand eines Ausführungsbeispiels nach der Zeichnung näher erläutert. Dabei zeigen in prinzipieller und nicht maßstäblicher Darstellung die
- Fig.1: in perspektivischer Draufsicht die Ölkanalseite eines Steuergehäuseteils für ein Getriebe bei einem Kraftfahrzeug;
- Fig.2: in perspektivischer Draufsicht einen Teil des Formwerkzeuges mit eingebrachtem Kunststoffmaterial;
- Fig.3 und 4: in verschiedenen Ansichten Teile des für das Herstellverfahren eingesetzten Formwerkzeuges nebst Formteil.

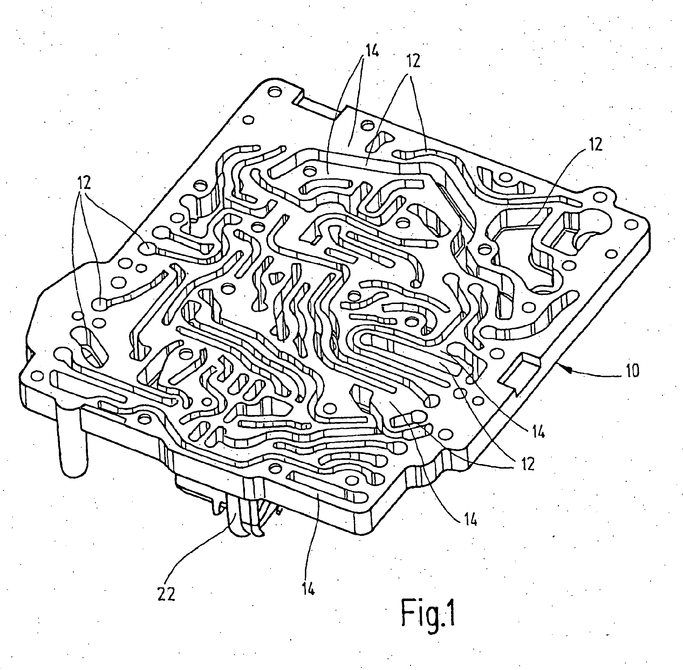

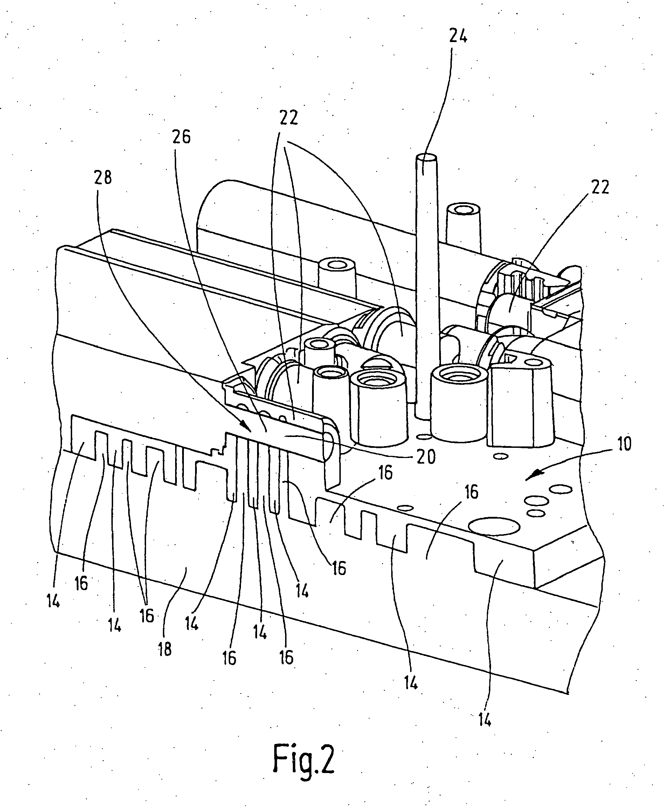

Die Fig.1 zeigt ein als Ganzes mit 10 bezeichnetes Kunststoffteil in Form eines Steuergehäuseteils, wie es bei Kraftfahrzeuggetrieben, beispielsweise in Form von Schalt- oder Automatikgetrieben, gegebenenfalls zusammen mit weiteren, nicht näher dargestellten Steuergehäuseteilen eingesetzt wird. Das in Fig.1 dargestellte Kunststoffteil 10 in Form des Steuergehäuseteils weist eine Vielzahl an fluidführenden Kanälen 12 auf, die entsprechend von Seitenwänden 14 begrenzt sind. In der Fig.2 ist ein Teil der dahingehenden Seitenwände 14 im Schnitt dargestellt und die zwischen den Seitenwänden 14 in Nebeneinanderanordnung zwischenliegenden Hohlräume bilden später nach der Formgebung einen Teil der fluidführenden Kanäle 12 aus und sind in der Darstellung nach der Fig. 2 von Führungsstegen 16 begrenzt, die Teil eines Formwerkzeuges 18 sind, von dem in der Fig.2 nur ein unterer Teil wiedergegeben ist, wohingegen der einfacheren Darstellung wegen die obere Formwerkzeughälfte zum Schließen und Öffnen der Gesamtform nicht näher dargestellt ist.

Zur Begrenzung eines Einbauraumes 20 nach außen soll das Kunststoffmaterial diesen in radialer Umfangsrichtung umfassen und bildet dann dergestalt im wesentlichen zylindrische Gehäuseteile 22 aus zur Aufnahme von Einbauteilen, beispielsweise in Form nicht näher dargestellter Steuerventile für das Steuergehäuseteil 10. Insoweit ist die dem Betrachter zugewandte Oberseite des Steuergehäuseteils nach der Fig.1 in Fig.2 auf der Unterseite liegend angeordnet und die Unterseite des Steuergehäuseteils nach der Fig.1 mit ihren vorstehenden Gehäuseteilen 22 bildet die Oberseite gemäß der Darstellung nach der Fig.2 aus. Des weiteren ist in der Fig.2 ein mit Kunststoffmaterial ausgefüllter Zuführkanal **24** wiedergegeben, der der Zufuhr des Kunststoffmaterials in die Form dient, wobei, wie bereits dargelegt, in der Fig.2 nur das Werkzeugunterteil des Formwerkzeuges 18 wiedergegeben ist und nicht das zugehörige Werkzeugoberteil, das die Form nach oben hin formend begrenzt.

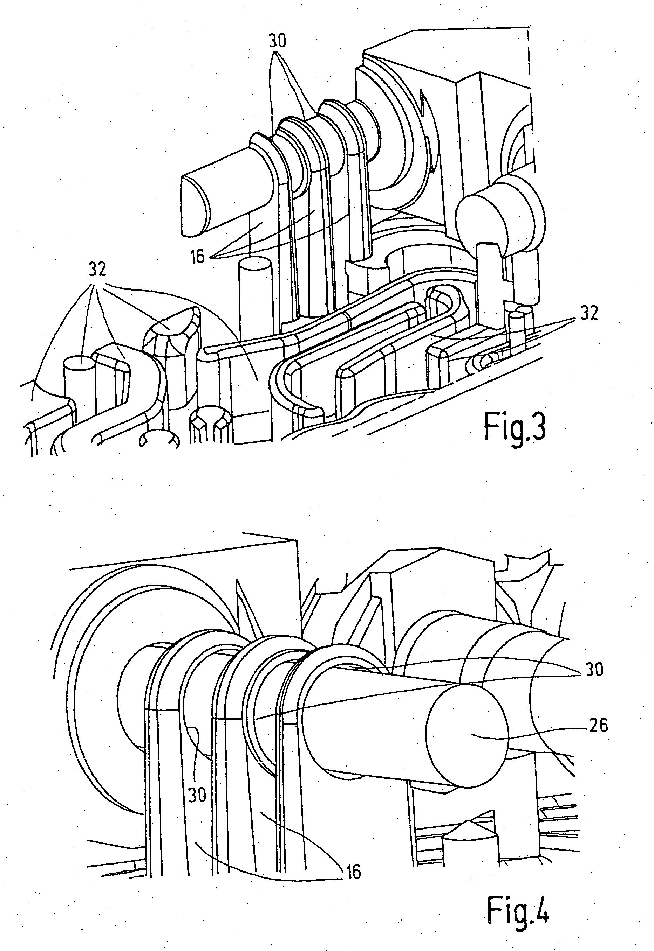

Wie die Fig.2 des weiteren zeigt, ist in Blickrichtung auf die Fig.2 gesehen links ein Formteil 26 der Form angeordnet, wobei eine Vielzahl an Formteilen 26 notwendig ist in Abhängigkeit der zu bildenden Gehäuseteile 22 für den Einsatz der Steuerventile. Die dahingehenden Formteile 26 sind in der Art eines zylindrischen Schieberkernes ausgebildet, der in der Fig.3 vollständig wiedergegeben ist und ansonsten in den Fig.2 und 3 als Halbschnitt. Das jeweilige Formteil 26 mündet mit seinem freien Ende stirnseitig in die Umgebung aus und ist an seinem anderen Ende in einer Art Schieberplatte 28 geführt, die eine Relativbewegung quer zum Formwerkzeug 18 ermöglicht und mithin quer verlaufend zum Zuführkanal 24, wobei in der ausgefahrenen, nicht formenden Stellung der jeweilige Schieberkern 26 außer Eingriff zu den Führungsstegen 16 des Formwerkzeuges 18 ist und in der formgebenden Gebrauchsstellung in dieselbigen eingreift, was noch näher erläutert werden wird.

Wie die Fig.3 und 4 zeigen, weisen die nebeneinander angeordneten Führungsstege 16 des Formwerkzeuges 18 Durchgriffsöffnungen 30 auf, die dem Durchgriff des Formteils 26 dienen und, wie insbesondere die Fig.4 zeigt, deren freier Querschnitt größer gewählt wird als der freie Querschnitt des zu formenden Einbauraumes 20. Wird nun beispielsweise dem Zuführkanal 24 das Kunststoffmaterial der Form zugeführt, füllt dieses den Raum aus zwischen den Führungsstegen 16 sowie den Raum zwischen den Durchgriffsöffnungen 30 und der Außenumfangsseite des Formteils 26 in Form des Schieberkernes, unter der Voraussetzung, dass gemäß der Darstellung nach den Fig.2 bis 4 sich die Schieberplatte 28 in der formgebenden Gebrauchsposition befindet. Der besseren Darstellung wegen wurden in den Fig. 3 und 4 nur Teile des Formwerkzeuges 18 mit Formteil 26 dargestellt sowie Schieberplatte 28 und nicht das Kunststoffmaterial, das insoweit zugeführt die freigelassenen Räume innerhalb der Form gemäß der Darstellung nach der Fig.2 ausfüllt. Insoweit bilden die weiteren Formstege 32 gemäß der Darstellung nach der Fig.3 in ihren Zwischenabständen die Seitenwände 14 des Kunststoffteils 10 mit aus und sobald das Kunststoffteil 10 entformt ist, sind dann die ausgeformten Formstege 32 des Formwerkzeuges 18 gleichzusetzen mit den fluidführenden Kanälen 12 des angesprochenen Steuergehäuseteils.

Dadurch, dass das Formteil 26 in Form des Schieberkernes mit einem radialen Abstand in die Durchgriffsöffnungen 30 der Führungsstege 16 des Formwerkzeuges 18 eingreift, beispielsweise mit einem Abstand zwischen 0,05 bis 0,5 mm, ist das Ein- und Ausfahren der Schieberplatte 28 ohne weiteres möglich und Kollisionen mit dem sonstigen Formwerkzeug 18 und seinen Teilen sind mit Sicherheit vermieden. Um eine sichere Positionierung der formgebenden Teile zueinander gewährleisten zu können, kann darüber hinaus vorgesehen sein, dass jedes Formteil 26 an seinem freien Ende im sonstigen Werkzeug (nicht dargestellt) gefangen und somit in der Vorwärtsbewegung blockiert ist. Ist das Kunststoffmaterial zur Formgebung des Kunststoffteils 10 eingebracht, lagert sich dieses auch innerhalb der Durchgriffsöffnungen 30 zwischen dem jeweiligen Führungssteg 16 und dem Formteil 26 in Form des Schieberkernes ab, wobei die dahingehende Kunststoffintrusion kein wesentliches Hemmnis darstellt beim Zurückfahren der Schieberplatte 28, bei dem die Formteile 26 dann außer Eingriff mit den Führungsstegen 16 gelangen und mit dem eingebrachten Kunststoffmaterial zwischen den Führungsstegen 16, die insoweit auch den Schieberkern 26 übergreifen (vgl. Fig.2). Ist das jeweilige Formteil 26 dergestalt außer Eingriff gebracht, läßt sich das Kunststoffteil 10 entformen, beispielsweise indem in Blickrichtung auf die Fig.2 gesehen das Werkzeugunterteil in Form des Werkzeuges 18 nach unten verfährt. Die nicht näher dargestellten verbleibenden Wandteile in den Durchgriffsöffnungen 30 werden dann dergestalt von dem Formwerkzeug 18 mit seinen Führungsstegen 16 ausgebrochen und die benötigten Wandteile zur Bildung des jeweiligen Gehäuseteils 22 für das Steuerventil bleiben gemäß der Darstellung nach der Fig.1 stehen. Die Maßhaltigkeit des dahingehenden Fertigungsverfahrens ist derart genau, dass unmittelbar ein Steuerventil in das zuordenbare Gehäuseteil 22 des Steuergehäuseteils einbringbar ist. Gegebenenfalls sind Nacharbeiten notwendig im Rahmen üblicher Spritzguß- oder Druckgußverfahren, bei denen mittels Abreinigen unter Einsatz von Bürsten oder Abblasen Restgrate in der Form beseitigt werden.

Als Formteil wird insbesondere ein Duroplast, vorzugsweise in Form von Phenolharz, eingesetzt, wie es unter anderem unter den Markenbezeichnungen "Bakelit" und "Vyncolit" bekannt geworden ist. Das dahingehende Phenolharz läßt sich in üblicher Weise mittels eines Spritz- oder Druckgußverfahrens unter Einsatz der beschriebenen Formwerkzeuge verarbeiten. Besonders vorteilhaft ist es, das Phenolharz mit Füllstoffen zu versehen, beispielsweise in Form von Mineralfasern, Glasfasern oder Kohlefasern, um dergestalt die Verarbeitbarkeit zu verbessern.

Das erhaltene Steuergehäuse für ein Fahrzeuggetriebe ist sehr temperaturstabil und druckfest und baut darüber hinaus konstruktiv leicht auf. Des weiteren wird eine sehr gute Füllung des Phenolharzes für das Kunststoffteil 10 erreicht, was der gewünschten hohen Druckstabilität entgegenkommt. Die erfindungsgemäße Lösung braucht nicht für die Anwendung bei Steuergehäuseteilen für Getriebe eingeschränkt zu sein, sondern kann insbesondere immer dort Anwendung finden, wo für Einbauteile in Phenolharzformteilen maßhaltige Einbauräume zu schaffen sind, die einstückig geformte Wandteile von Kunststoffteilen durchgreifen.

## Patentansprüche

1. Verfahren zum Herstellen eines Kunststoffteils (10), insbesondere in Form eines Steuergehäuseteils für ein Getriebe bei Kraftfahrzeugen, mit einer Vielzahl an fluidführenden Kanälen (12), das zumindest teilweise von Seitenwänden (14) begrenzt wird, von denen ein Teil in Nebeneinanderanordnung einen Einbauraum (20) zur Aufnahme mindestens eines Einbauteils begrenzt, der mittels eines Formteils (26) als Teil eines Formwerkzeuges (18) erstellt wird.

2. Verfahren nach Anspruch 1, **dadurch gekennzeichnet, dass** das Formwerkzeug (18) mit Führungsstegen (16) versehen wird, die die Seitenwände (14) des Einbauraumes (20) zumindest teilweise begrenzen und in die Durchgriffsöffnungen (30) eingebracht werden, die dem Durchgriff des Formteils (26) dienen, und deren freier Querschnitt größer gewählt wird als der freie Querschnitt des Einbauraumes (20).

3. Verfahren nach Anspruch 2, **dadurch gekennzeichnet, dass** bei in den Durchgriffsöffnungen (30) des Formwerkzeuges (18) eingebrachtem Formteil (26) das Kunststoffmaterial dem Formwerkzeug (18) zugeführt wird, das den Raum zwischen Formteil (26) und zuordenbarer Durchgriffsöffnung (30) unter Bildung von Wandteilen ausfüllt und dass nach Entfernen des Formteils (26) und Ausformen des Kunststoffteils (10) aus dem Formwerkzeug (18) dieses die Wandteile unter Freigabe des Einbauraumes (20) ausbricht.

4. Verfahren nach einem der Ansprüche 1 bis 3, **dadurch gekennzeichnet, dass** als Formmaterial für das Kunststoffteil (10) ein Duroplast, vorzugsweise Phenolharz, eingesetzt wird, das mittels eines Spritz- oder Druckgußverfahrens in das Formwerkzeug (18) eingebracht wird.

5. Werkzeug zum Durchführen des Verfahrens nach einem der Ansprüche 1 bis **4, dadurch gekennzeichnet, dass** dieses mindestens ein schließbares Formwerkzeug (18) aufweist sowie ein Formteil (26), das unabhängig vom Formwerkzeug (18) zu diesem eine Relativbewegung ausführt.

6. Werkzeug nach Anspruch 5, **dadurch gekennzeichnet, dass** das Formteil (26) aus einem im wesentlichen zylindrisch ausgebildeten Schieberkern besteht, der quer zu den Führungsstegen (16) des Formwerkzeuges (18) verfahrbar angeordnet ist.

7. Kunststoffteil, hergestellt nach einem Verfahren der Ansprüche 1 bis 4 und mittels eines Werkzeuges nach einem der Ansprüche 5 und 6, **dadurch gekennzeichnet, dass** es als Steuergehäuseteil für ein Getriebe bei Kraftfahrzeugen dient.

8. Kunststoffteil nach Anspruch 7, **dadurch gekennzeichnet, dass** das Steuergehäuseteil fluidführende Kanäle (12) aufweist, die zumindest teilweise von Seitenwänden (14) begrenzt sind, von denen ein Teil einen Einbauraum (20) begrenzt für den Eingriff eines Steuerventils als Einbauteil, das der Fluidansteuerung innerhalb der Kanäle (12) dient.
